# EUROPEAN PATENT SPECIFICATION

(11) **EP 2 598 393 B1**
(45) Date of publication and mention of the grant of the patent: **06.09.2017**
(21) Application number: 10757827.0
(22) Date of filing: 28.07.2010
(51) Int. Cl.: B62D 5/065, B62D 6/02, B62D 5/06

(54) **POWER STEERING SYSTEM FOR A VEHICLE**
SERVOLENKSYSTEM FÜR EIN FAHRZEUG
SYSTÈME DE DIRECTION ASSISTÉE POUR UN VÉHICULE

(43) Date of publication of application: 05.06.2013
(73) Proprietor: Volvo Lastvagnar AB, 405 08 Göteborg (SE)
(72) Inventor: BLOND, Jean-Marc, 69780 Saint Pierre de Chandieu (FR); VILLOT, Olivier, 38460 Saint Romain de Jalionas (FR)
(74) Representative: Faucheux, Jérôme
(86) International application number: PCT/IB2010/002174
(87) International publication number: WO 2012/014004

(56) References cited:
- WO-A1-84/03674
- DE-A1-102006 014 194
- JP-A- 2003 312 500
- US-A1- 2006 175 119
- US-A1- 2008 277 187

## Description

### Field of the invention

The present invention relates to a power steering system for a vehicle, especially an industrial vehicle such as a heavy truck.

### Technological background

A power steering system has been a standard feature in vehicles for many years, in particular in industrial vehicles. Such a system assists the vehicle driver by applying a force to the wheels, through a hydraulic steering actuator. Therefore, a lower effort is required for the driver when turning the steering wheel and the vehicle is more easy to manoeuvre.

A power steering system typically comprises a hydraulic circuit carrying a pressurized fluid - such as oil - from a tank to the steering actuator, by means of a pump.

In many power steering systems, the pump is driven by the vehicle combustion engine, generally gear driven or belt-driven by said engine.

There may also be provided an electrically driven pump, especially in hybrid vehicles - i.e. vehicles having both a combustion engine and an electric engine - where said pump is driven by an electric motor. Thanks to this arrangement, the power steering system can operate even when the combustion engine has been turned off to save fuel. An electrically driven pump can also be provided in non-hybrid vehicles. The corresponding advantages is that there is the hydraulic pump can be stopped if no steering assistance is required.

However, power steering systems using electrically driven pumps have several drawbacks linked to the availability of electric power supply and/or to the reliability of electrical components such as the electric motor or the power supply system.

It therefore appears that, from several standpoints, there is room for improvement in power steering systems. Document WO 84/03674 A1 discloses a power steering system for a vehicle, said vehicle comprising a traction engine designed to drive wheels through a drive line comprising an upstream portion which is connected to the engine and a downstream portion which is permanently connected to the drive wheels. This power steering system comprises a hydraulic circuit including a fluid tank and a steering actuator. The steering system comprises a first pump driven by the vehicle engine and a second pump driven by the vehicle movement. The first and the second pumps are arranged in parallel between the fluid tank and the steering actuator, said pumps being capable of supplying fluid from the fluid tank to the steering actuator at the same time.

### Summary

It is an object of the present invention to provide an improved power steering system which can overcome the drawbacks encountered in conventional power steering systems having an electrically driven pump, not only in hybrid vehicles.

Another object of the present invention is to provide a power steering system which is reliable while also having a high efficiency.

The invention therefore relates to a power steering system for a vehicle, said vehicle comprising a traction engine designed to drive wheels through a driveline comprising an upstream portion which is connected to the engine and a downstream portion which is permanently connected to the drive wheels, said power steering system comprising a hydraulic circuit including a fluid tank and a steering actuator.

According to the invention, such a power steering system further comprises:
- a first pump which is driven by mechanical power from the downstream portion of the driveline;
- a second pump which is driven by an electric motor;
the first and second pumps being arranged in parallel between the fluid tank and the steering actuator and being capable of supplying fluid from the fluid tank to the steering actuator at the same time.

According to the invention, the first pump is a variable displacement pump designed to deliver a relatively high fluid flow at low vehicle speed and a limited fluid flow at high vehicle speed, in order to avoid over flow.

Thus, in a power steering system according to the invention, the first pump is active as soon as the vehicle is moving, which ensures that at least a minimum steering power is always available when the vehicle is motion. In particular, in a hybrid vehicle, the vehicle can be steered when the traction engine is off. Moreover, whether the vehicle is hybrid or not, if a problem occurs in an electrical component, either in the electric motor or in the power supply system, resulting in the second pump being deactivated, the vehicle can still be steered thanks to the first pump, as long as the vehicle is moving.

At high vehicle speed, for example around 80 km/h or above, the first pump can provide by itself a sufficient steering power.

At low vehicle speed, for example around 10-15 km/h or below, the steering power provided by the first pump is lower. But even if the first pump is the only one to be active, for example due to a failure of an electrical component, there will not be serious consequences. Indeed, at low vehicle speeds, for example under 10-15 km/h, there is no risk for safety if the steering power system of the vehicle does not work at its full capacity.

Another advantage of the invention is that the efficiency of the first pump, which is mechanically driven, is higher than the efficiency of the second pump, which is electrically driven. This results in an improved efficiency of the overall power steering system. Moreover, the power steering system according to the invention is more robust than prior art systems.

Therefore, the invention ensures that the vehicle is safe whatever the operating conditions, i.e. at low vehicle speed, at high vehicle speed, even if the traction engine is off or if the electrically driven pump does not work properly.

It has to be noted that the first pump, being driven by mechanical power from the wheels, is functionally dissociated from the traction engine. In practice, the first pump could be coupled to the output shaft of the gear box and mounted onto the gear box housing.

As regards the second pump, it is independent from the traction engine. In a refined embodiment, said second pump can be driven by a dedicated electric motor, i.e. an electric motor which is distinct from an electric motor designed to move the vehicle..

According to a preferred implementation of the invention, the power steering system further comprises an electronic control unit capable of controlling the electric motor which drives the second pump, said electronic control unit being designed to make the second pump deliver a fluid flow, at low vehicle speed, which is high enough to compensate for the low fluid flow delivered by the first pump, in order to ensure a sufficient fluid supply to the steering actuator.

The electronic control unit can further be designed to make the second pump deliver a complementary fluid flow in addition to the main fluid flow delivered by the first pump at high vehicle speed.

Alternatively, the electronic control unit can further be designed to stop the second pump at high vehicle speed.

In other words, the first pump acts as the main pump whereas the second pump acts as an auxiliary pump designed to supplement the fluid flow at low speeds.

Advantageously, the hydraulic circuit may further comprise a flow limiter located upstream from the steering actuator input. This makes it possible to avoid a too high fluid flow in the steering actuator at high vehicle speeds.

In practice, the power steering system can comprise an electronic control unit or mechanical means capable of controlling the variation of the first pump displacement.

According to another aspect, the invention relates to a vehicle comprising a traction engine designed to drive wheels through a driveline comprising an upstream portion which is connected to the engine and a downstream portion which is permanently connected to the drive wheels, and a power steering system as previously described.

The driveline may include a gearbox assembly having an output shaft which is permanently connected to the drive wheels of the vehicle, the first pump being connected to the gearbox assembly output shaft.

According to yet another aspect, the invention relates to a method for controlling a power steering system for a vehicle, as previously described, said method comprising the control of the operation of the first pump and/or the second pump so that, at low vehicle speed, the second pump delivers a fluid flow high enough to compensate for the low fluid flow delivered by the first pump, in order to ensure a sufficient fluid supply to the steering actuator.

The method can comprise the control of the second pump, at high vehicle speeds, to make said second pump deliver a complementary fluid flow or to stop said second pump. In this case, the second pump delivers only a complementary fluid flow, i.e. the main fluid flow comes from the first pump.

The method can also comprise providing a variable displacement pump as the first pump and controlling the pump displacement to be high at low vehicle speed and low at high vehicle speed.

These and other features and advantages will become apparent upon reading the following description in view of the drawing attached hereto representing, as non-limiting examples, embodiments of a vehicle according to the invention.

### Brief description of the drawings

The following detailed description of several embodiments of the invention is better understood when read in conjunction with the appended drawings being understood, however, that the invention is not limited to the specific embodiments disclosed.
Figure 1 is a schematic and partial drawing of a vehicle showing a power steering system according to a first embodiment the invention,
Figure 2 is a diagram illustrating the flow rate of the first pump and of the second pump of the power steering system as a function of the vehicle speed,

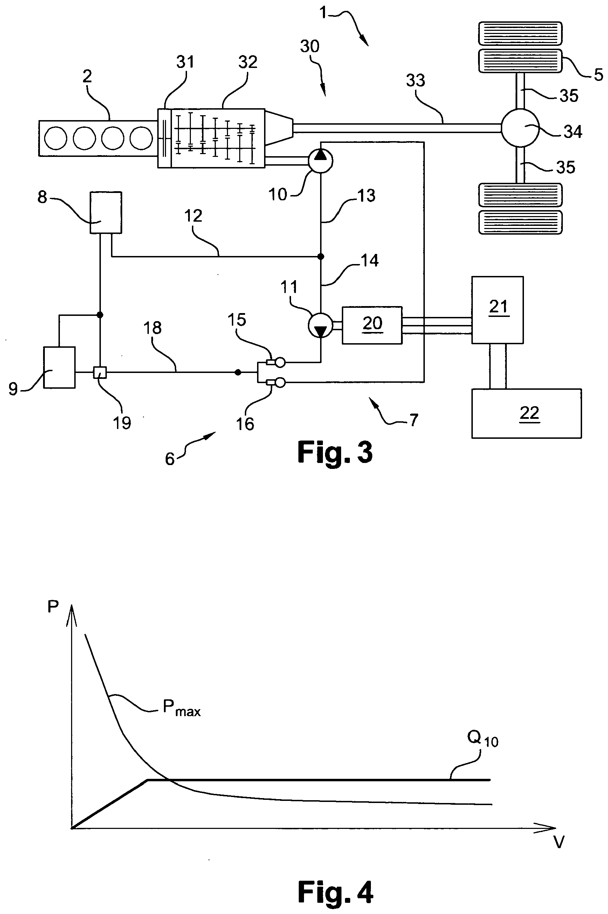

Figure 3 is a schematic and partial drawing of a vehicle showing a power steering system according to a second embodiment the invention,
Figure 4 is a diagram illustrating the flow rate of the first pump as a function of the vehicle speed, as well as the fluid pressure required for steering the vehicle as a function of the vehicle speed.

### Detailed description

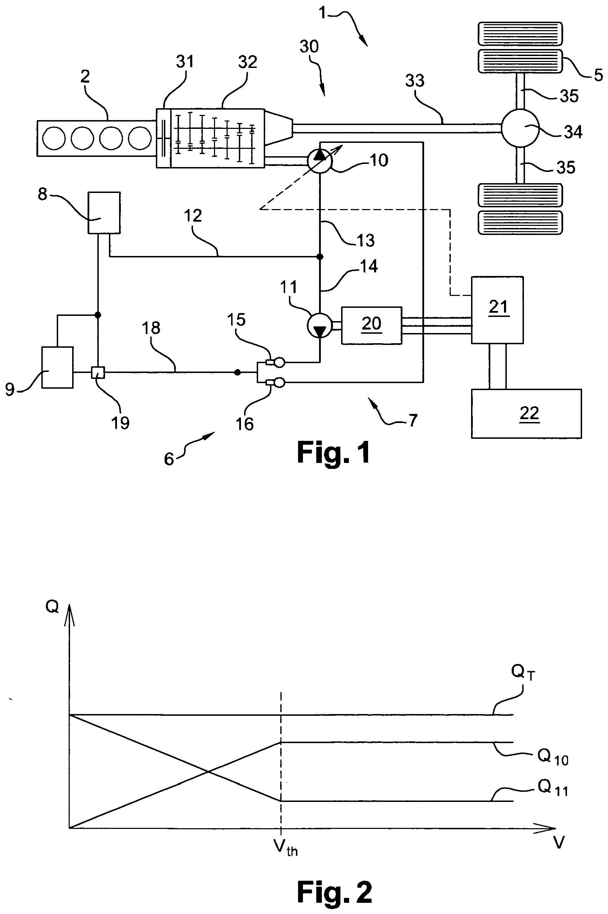

As this is schematically and partially illustrated in Figure 1, a vehicle 1, such as a truck, comprises a traction engine 2 which is able to drive the drive wheels 5 of the vehicle through a driveline 30. In many cases, such as in a conventional truck as represented on Figure 1, the traction engine 2 is a combustion engine and the driveline 30 includes mainly a clutch 31, a gearbox 32, a propulsion shaft 33, a differential 34 and a drive shaft 35 for each drive wheel 5. In such a case, it is possible to define a downstream portion of the driveline 30 as being the portion which is permanently connected to the drive wheels 5, even if the clutch 31 is opened, thereby disconnecting the gearbox from the traction engine, and/or if the gearbox is in neutral. In such a case, the downstream portion of the gearbox can be considered to start from the gearbox assembly output shaft and also comprises the propulsion shaft, the differential and the drive shafts. In the case of a purely electrical vehicle, where the traction engine is an electrical motor, a similar driveline can be used, possibly without the clutch. In a parallel hybrid truck, an electric motor can be added to the driveline of a conventional truck, for example upstream of the gearbox, although such an electrical motor could also be connected downstream of the gearbox. A series hybrid vehicle can be considered as a variant of an electrical vehicle where at lest part of the electrical power needed by the traction engine is provided by an electrical generator driven by a combustion engine.

The vehicle 1 further comprises a power steering system 6 in order to assist the driver in steering the vehicle 1.

The power steering system 6 comprises a closed hydraulic circuit 7 in which a fluid, typically oil, can flow from a fluid tank 8 to a steering actuator 9 and then back to the fluid tank 8. The fluid is moved in the hydraulic circuit 7 by means of a first pump 10 and a second pump 11 which are arranged in parallel between the fluid tank 8 and the steering actuator 9. Downstream from the oil tank 8, the outlet pipe 12 is divided into a first pipe 13 comprising said first pump 10 and a second pipe 14 comprising said second pump 11. The first and second pipes 13, 14 each preferably comprise, downstream from the corresponding pump 10, 11, a non return valve 15, respectively 16. The first and second pipes 13, 14 then merge into a common pipe 18 upstream from the steering actuator 9.

Optionally, the common pipe 18 comprises, upstream from the steering actuator 9, a flow limiter 19 designed to avoid over flow at the steering actuator input, if the flow delivered by both pumps 10, 11 is higher than flow need. In addition or in a variant, the first pump 10 preferably includes a flow limiter to avoid having a very high flow rate delivered by said pump 10 due to its vehicle speed dependence.

The first pump 10 is driven by mechanical power from the downstream portion of the driveline 30 which is permanently connected to the wheels 5. It can for example be coupled to the output shaft of the gear box 32, or to any internal shaft of the gearbox which is coupled to said output shaft, and mounted onto the gear box housing.

The second pump 11 is driven by an electrical motor, preferably a dedicated electric motor 20, controlled by an electronic control unit 21 coupled to an energy storage system 22.

The hydraulic circuit 7 is designed so that the first and second pumps 10, 11 are capable of supplying fluid from the fluid tank 8 to the steering actuator 9 at the same time.

The first pump 10 acts as the main pump. It delivers a flow rate which is all the more high as the wheels 5 rotate quickly, i.e. the vehicle speed is high. As long as the vehicle is not at standstill, the first pump 10 ensures at least a minimum flow rate in the steering actuator 9, i.e. at least a minimum steering assistance effort, even if the second pump 11 does not work, for example in case of an electrical problem. In other words, the first pump 10 also acts as a safety pump since it makes the vehicle 1 safe at a minimum speed such that the driver can keep the control of the vehicle 1 in case of failure of an electric component. In the case of a hybrid vehicle, the first pump 10 also allows the vehicle 1 to be steered when the traction engine 2 is off. Also, it must be mentioned that, in most cases, a mechanically driven pump has the best overall efficiency because it does not suffer from electrical losses.

The second pump 11 can be considered as a complementary pump. Its function is to deliver only a complementary flow rate. Thus, at low vehicle speed, it is driven to compensate the lack of flow in the first pipe 13. At higher speed, and depending on the limited flow in the first pump 10, the second pump 11 can deliver an additional flow or alternatively be stopped.

Figure 2 illustrates the fluid flow Q in the hydraulic circuit 7 as a function of the vehicle speed V.

The flow Q10 delivered by the first pump 10 increases with the vehicle speed V and, after a threshold Vth, said flow Q10 reaches a maximum due to the flow limiter included in the first pump 10. As regards the flow Q11 delivered by the second pump 11, it is made to decrease preferably substantially proportionally to the increase in the first pump flow Q10. The total fluid flow QT entering the steering actuator, possibly limited by the flow limiter 19, is therefore substantially constant.

By way of an example, a low fluid flow in the pumps can be around 6 l/min, while a high fluid flow in the pumps can be around 15 l/min.

According to the invention and such as illustrated in Figure 1, the first pump 10 is a variable displacement pump which is designed to deliver a relatively high fluid flow at low vehicle speed - in order to limit the complementary flow to be delivered by the second pump - and a limited fluid flow at high vehicle speed - in order to avoid overflow and loss of energy.

The displacement of the first pump 10 can be varied as a function of vehicle speed information, by means of the electronic control unit 21.

Of course, the electric pump and, if the mechanical pump is of the variable displacement type, the mechanical pump can also be controlled according to other parameters which may influence the need to provide steering assistance, such as the steering wheel angular position or angular speed, or according to other parameters. For example the control of one pump can be modified if it is detected that the other pump is faulty, or a variable capacity mechanical pump can be controlled as a function of the availability of electrical energy for the electrical pump.

Of course, the invention is not restricted to the embodiments described above by way of non-limiting examples, but on the contrary it encompasses all embodiments thereof. It is to be understood that this invention is only limited by the scope and content of the appended claims.

## Claims

1. A power steering system for a vehicle, said vehicle (1) comprising a traction engine (2) designed to drive wheels (5) through a driveline (30) comprising an upstream portion which is connected to the engine and a downstream portion which is permanently connected to the drive wheels, said power steering system (6) comprising a hydraulic circuit (7) including a fluid tank (8) and a steering actuator (9), wherein the power steering system (6) further comprises:
- a first pump (10) which is driven by mechanical power from the downstream portion of the driveline (30);
- a second pump (11) which is driven by an electric motor (20);
the first and second pumps (10, 11) being arranged in parallel between the fluid tank (8) and the steering actuator (9) and being capable of supplying fluid from the fluid tank (8) to the steering actuator (9) at the same time, wherein the first pump (10) is a variable displacement pump designed to deliver a relatively high fluid flow at low vehicle speed and a limited fluid flow at high vehicle speed.

2. The power steering system according to claim 1, **characterized in that** it further comprises an electronic control unit (21) capable of controlling the electric motor (20) which drives the second pump (11), said electronic control unit (21) being designed to make the second pump (11) deliver a fluid flow, at low vehicle speed, which is high enough to compensate for the low fluid flow delivered by the first pump (10), in order to ensure a sufficient fluid supply to the steering actuator (9).

3. The power steering system according to claim 2, **characterized in that** the electronic control unit (21) is further designed to make the second pump (11) deliver a complementary fluid flow in addition to the main fluid flow delivered by the first pump (10) at high vehicle speed.

4. The power steering system according to claim 2, **characterized in that** the electronic control unit (21) is further designed to stop the second pump (11) at high vehicle speed.

5. The power steering system according to any one of claims 1 to 4, **characterized in that** the hydraulic circuit (7) further comprises a flow limiter (19) located upstream from the steering actuator input.

6. The power steering system according to any one of claims 1 to 5, **characterized in that** it comprises an electronic control unit (21) capable of controlling the variation of the first pump displacement.

7. The power steering system according to any one of claims 1 to 5, **characterized in that** it comprises mechanical means capable of varying the pump displacement.

8. A vehicle comprising a traction engine designed to drive wheels (5) through a driveline comprising an upstream portion which is connected to the engine and a downstream portion which is permanently connected to the drive wheels, **characterized in that** it further comprises a power steering system (6) according to any one of claims 1 to 7.

9. A vehicle according to claim 8, **characterized in that** the driveline (30) includes a gearbox assembly having an output shaft which is permanently connected to the drive wheels (5) of the vehicle, and **in that** the first pump (10) is connected to the gearbox assembly output shaft.

10. A method for controlling a power steering system for a vehicle (1) according to any one of claims 1 to 7, **characterized in that** the method comprises the control of the operation of the first pump (10) and/or the second pump (11) so that, at low vehicle speed, the second pump (11) delivers a fluid flow high enough to compensate for the low fluid flow delivered by the first pump (10), in order to ensure a sufficient fluid supply to the steering actuator (9).

11. The method according to claim 10, **characterized in that** the method comprises the control of the second pump (11), at high vehicle speeds, to make said second pump (11) deliver a complementary fluid flow or to stop said second pump (11).

12. The method according to claim 10 or 11, **characterized in that** the method comprises providing a variable displacement pump as the first pump (10) and controlling the pump displacement to be high at low vehicle speed and low at high vehicle speed.

## Patentansprüche

1. Servolenkungssystem für ein Fahrzeug, wobei das Fahrzeug (1) eine Zugmaschine (2) umfasst, die dazu ausgelegt ist, Räder (5) durch einen Antriebsstrang (30) anzutreiben, der einen stromaufwärtigen Abschnitt, der mit dem Motor verbunden ist, und einen stromabwärtigen Abschnitt umfasst, der permanent mit den Antriebsrädern verbunden ist, wobei das Servolenkungssystem (6) einen Hydraulikkreis (7) umfasst, der einen Fluidtank (8) und einen Lenkaktuator (9) einschließt, wobei das Servolenkungssystem (6) ferner umfasst:
- eine erste Pumpe (10), die durch mechanische Leistung von dem stromabwärtigen Abschnitt des Antriebsstrangs (30) angetrieben wird;
- eine zweite Pumpe (11), die durch einen Elektromotor (20) angetrieben wird;
wobei die erste und die zweite Pumpe (10, 11) parallel zwischen dem Fluidtank (8) und dem Lenkaktuator (9) angeordnet sind und gleichzeitig dem Lenkaktuator (9) Fluid von dem Fluidtank (8) zuführen können,
wobei die erste Pumpe (10) eine Pumpe mit variabler Verdrängung ist, die dazu ausgelegt ist, bei geringer Fahrzeuggeschwindigkeit einen relativ hohen Fluiddurchfluss und bei hoher Fahrzeuggeschwindigkeit einen eingeschränkten Fluiddurchfluss zu fördern.

2. Servolenkungssystem nach Anspruch 1, **dadurch gekennzeichnet, dass** es ferner eine elektronische Steuereinheit (21) umfasst, die den Elektromotor (20) steuern kann, der die zweite Pumpe (11) antreibt, wobei die elektronische Steuereinheit (21) dazu ausgelegt ist, die zweite Pumpe (11) zu veranlassen, bei geringer Fahrzeuggeschwindigkeit einen Fluiddurchfluss zu fördern, der hoch genug ist, um den durch die erste Pumpe (10) geförderten niedrigen Fluiddurchfluss zu kompensieren, um eine ausreichende Fluidzufuhr zu dem Lenkaktuator (9) sicherzustellen.

3. Servolenkungssystem nach Anspruch 2, **dadurch gekennzeichnet, dass** die elektronische Steuereinheit (21) ferner dazu ausgelegt ist, die zweite Pumpe (11) zu veranlassen, bei hoher Fahrzeuggeschwindigkeit zusätzlich zu dem durch die erste Pumpe (10) geförderten Hauptfluiddurchfluss einen komplementären Fluiddurchfluss zu fördern.

4. Servolenkungssystem nach Anspruch 2, **dadurch gekennzeichnet, dass** die elektronische Steuereinheit (21) ferner dazu ausgelegt ist, die zweite Pumpe (11) bei hoher Fahrzeuggeschwindigkeit zu stoppen.

5. Servolenkungssystem nach einem der Ansprüche 1 bis 4, **dadurch gekennzeichnet, dass** der Hydraulikkreis (7) ferner einen Durchflussbegrenzer (19) umfasst, der sich stromaufwärts von dem Lenkaktuatoreingang befindet.

6. Servolenkungssystem nach einem der Ansprüche 1 bis 5, **dadurch gekennzeichnet, dass** es eine elektronische Steuereinheit (21) umfasst, welche die Änderung der Verdrängung der ersten Pumpe steuern kann.

7. Servolenkungssystem nach einem der Ansprüche 1 bis 5, **dadurch gekennzeichnet, dass** es mechanische Mittel umfasst, die die Pumpenverdrängung ändern können.

8. Fahrzeug umfassend eine Zugmaschine, die dazu ausgelegt ist, Räder (5) durch einen Antriebsstrang anzutreiben, der einen stromaufwärtigen Abschnitt, der mit dem Motor verbunden ist, und einen stromabwärtigen Abschnitt umfasst, der permanent mit den Antriebsrädern verbunden ist, **dadurch gekennzeichnet, dass** es ferner ein Servolenkungssystem (6) nach einem der Ansprüche 1 bis 7 umfasst.

9. Fahrzeug nach Anspruch 8, **dadurch gekennzeichnet, dass** der Antriebsstrang (30) eine Getriebeanordnung einschließt, die eine Ausgangswelle aufweist, die permanent mit den Antriebsrädern (5) des Fahrzeugs verbunden ist, und dass die erste Pumpe (10) mit der Getriebeanordnungs-Ausgangswelle verbunden ist.

10. Verfahren zum Steuern eines Servolenkungssystems für ein Fahrzeug (1) nach einem der Ansprüche 1 bis 7, **dadurch gekennzeichnet, dass** das Verfahren die Steuerung des Betriebs der ersten Pumpe (10) und/oder der zweiten Pumpe (11) derart umfasst, dass die zweite Pumpe (11) bei geringer Fahrzeuggeschwindigkeit einen Fluiddurchfluss fördert, der hoch genug ist, um den durch die erste Pumpe (10) geförderten niedrigen Fluiddurchfluss zu kompensieren, um eine ausreichende Fluidzufuhr zu dem Lenkaktuator (9) sicherzustellen.

11. Verfahren nach Anspruch 10, **dadurch gekennzeichnet, dass** das Verfahren die Steuerung der zweiten Pumpe (11) derart umfasst, dass bei hohen Fahrzeuggeschwindigkeiten die zweite Pumpe (11) veranlasst wird, einen komplementären Fluiddurchfluss zu fördern oder die zweite Pumpe (11) zu stoppen.

12. Verfahren nach Anspruch 10 oder 11, **dadurch gekennzeichnet, dass** das Verfahren ein Bereitstellen einer Pumpe mit variabler Verdrängung, wie die erste Pumpe (10), und ein Steuern der Pumpenverdrängung derart umfasst, dass sie bei niedriger Fahrzeuggeschwindigkeit hoch und bei hoher Fahrzeuggeschwindigkeit niedrig ist.

## Revendications

1. Système de direction assistée pour véhicule, ledit véhicule (1) comprenant un moteur de traction (2) conçu pour entraîner les roues motrices (5) par l'intermédiaire d'une ligne (30) d'arbres de transmission comprenant une partie amont qui est raccordée au moteur et une partie aval qui est raccordée en permanence aux roues motrices, ledit système de direction assistée (6) comprenant un circuit hydraulique (7) qui comprend un réservoir (8) de fluide et un actionneur de direction (9), dans lequel le système de direction assistée (6) comprend en outre :
- une première pompe (10) qui est entraînée par la puissance mécanique de la partie aval de la ligne (30) d'arbres de transmission ;
- une seconde pompe (11) qui est entraînée par un moteur électrique (20),
les première et seconde pompes (10, 11) étant installées en parallèle entre le réservoir (8) de fluide et l'actionneur de direction (9) et étant capables d'alimenter en même temps l'actionneur de direction (9) en fluide provenant du réservoir (8) de fluide,
**caractérisé en ce que** la première pompe (10) est une pompe à cylindrée variable conçue pour débiter un flux relativement élevé de fluide à faible vitesse du véhicule et un flux limité de fluide à vitesse élevée du véhicule.

2. Système de direction assistée selon la revendication 1, **caractérisé en ce que** il comprend en outre une unité de commande électronique (21) capable de commander le moteur électrique (20) qui entraîne la seconde pompe (11), ladite unité de commande électronique (21) étant conçue pour faire débiter à la seconde pompe (11) un flux de fluide qui, à faible vitesse du véhicule, est assez élevé pour compenser le faible flux de fluide débité par la première pompe (10), afin de garantir une alimentation suffisante de fluide à l'actionneur de direction (9).

3. Système de direction assistée selon la revendication 2, **caractérisé en ce que** l'unité de commande électronique (21) est en outre conçue pour faire débiter à la seconde pompe (11) un flux complémentaire de fluide qui, à vitesse élevée du véhicule, s'ajoute au flux principal de fluide débité par la première pompe (10).

4. Système de direction assistée selon la revendication 2, **caractérisé en ce que** l'unité de commande électronique (21) est en outre conçue pour arrêter la seconde pompe (11) à vitesse élevée du véhicule.

5. Système de direction assistée selon l'une quelconque des revendications 1 à 4, **caractérisé en ce que** le circuit hydraulique (7) comprend en outre un limiteur de débit (19) situé en amont de l'entrée de l'actionneur de direction.

6. Système de direction assistée selon l'une quelconque des revendications 1 à 5, **caractérisé en ce qu'**il comprend une unité de commande électronique (21) capable de commander la variation de la cylindrée de la première pompe.

7. Système de direction assistée selon l'une quelconque des revendications 1 à 5, **caractérisé en ce qu'**il comprend un moyen mécanique capable de faire varier la cylindrée de la pompe.

8. Véhicule comprenant un moteur de traction conçu pour entraîner les roues motrices (5) par l'intermédiaire d'une ligne d'arbres de transmission comprenant une partie amont qui est raccordée au moteur et une partie aval qui est raccordée en permanence aux roues motrices, **caractérisé en ce qu'**il comprend en outre un système de direction assistée (6) selon l'une quelconque des revendications 1 à 7.

9. Véhicule selon la revendication 8, **caractérisé en ce que** la ligne (30) d'arbres de transmission comprend un ensemble boîte de vitesses comportant un arbre de sortie qui est raccordé en permanence aux roues motrices (5) du véhicule, et **en ce que** la première pompe (10) est raccordée à l'arbre de sortie de l'ensemble boîte de vitesses.

10. Procédé pour commander un système de direction assistée pour un véhicule (1) selon l'une quelconque des revendications 1 à 7, **caractérisé en ce que** le procédé comprend la commande du fonctionnement de la première pompe (10) et/ou de la seconde pompe (11) de façon à ce que, à faible vitesse du véhicule, la seconde pompe (11) débite un flux de fluide assez élevé pour compenser le faible flux de fluide débité par la première pompe (10), afin de garantir une alimentation suffisante de fluide à l'actionneur de direction (9).

11. Procédé selon la revendication 10, **caractérisé en ce que** le procédé comprend la commande de la seconde pompe (11) pour, à vitesses élevées du véhicule, faire débiter à la seconde pompe (11) un flux complémentaire de fluide ou arrêter ladite seconde pompe (11).

12. Procédé selon la revendication 10 ou 11, **caractérisé en ce que** le procédé comprend les opérations consistant à utiliser comme première pompe (10) une pompe à cylindrée variable et commander la cylindrée de la pompe pour qu'elle soit élevée à faible vitesse du véhicule et faible à vitesse élevée du véhicule.
